# EUROPEAN PATENT SPECIFICATION

(11) **EP 3 364 612 B1**
(45) Date of publication and mention of the grant of the patent: **01.04.2020**
(21) Application number: 18157026.8
(22) Date of filing: 15.02.2018
(51) Int. Cl.: H04L 12/725

(54) **METHOD FOR ROUTING DATA PACKETS IN A TELECOMMUNICATIONS NETWORK**
VERFAHREN ZUR WEITERLEITUNG VON DATENPAKETEN IN EINEM TELEKOMMUNIKATIONSNETZ
PROCÉDÉ DE ROUTAGE DE PAQUETS DE DONNÉES DANS UN RÉSEAU DE TÉLÉCOMMUNICATIONS

(30) Priority: 15.02.2017 IT 201700016943
(43) Date of publication of application: 22.08.2018
(73) Proprietor: Stoorm5 SRL, 40128 Bologna (IT)
(72) Inventor: CAMPI, Aldo, 40128 Bologna (IT)
(74) Representative: Bergadano, Mirko

(56) References cited:
- WO-A2-01/15386
- US-A1- 2012 163 381
- US-A1- 2014 269 716
- US-A1- 2016 173 373
- MOHAMMADKHAN ALI ET AL: "Protocols to support autonomy and control for NFV in software defined networks", 2015 IEEE CONFERENCE ON NETWORK FUNCTION VIRTUALIZATION AND SOFTWARE DEFINED NETWORK (NFV-SDN), IEEE, 18 November 2015 (2015-11-18), pages 163-169, XP032852438, DOI: 10.1109/NFV-SDN.2015.7387422

## Description

### PRIORITY CLAIM

*This application claims priority from Italian Patent Application No.* 102017000016943, filed on 15/02/2017*.*

The present invention relates to a method for routing data packets in a telecommunications network and to a corresponding telecommunications network.

In particular, the present invention finds advantageous, but not exclusive, application in the so-called "Internet of Things" (IoT), to which the following description will make explicit reference without loss of generality.

Nowadays, the Internet of Things (IoT) is enjoying considerable success and it is expected that in a few years there will be billions of devices in the world that will communicate with each other over IP networks, that is essentially over the Internet. This will have a significant effect on the paradigm of telecommunications networks. IoT opens a new scenario in which telecommunications networks must handle vast amounts of heterogeneous data that is generated by terminals that move between different access networks in an unpredictable manner and that have quality, security and service reliability requirements completely different from one another.

Traditional IP networks use transport technologies and protocols that have not been developed for the scenario envisaged by IoT, which makes the implementation of IoT systems difficult and expensive in terms of network management.

The so-called Software Defined Network (SDN) is a new network technology that is trying to provide a solution to the implementation problems of IoT systems. In an SDN it is possible to dynamically program the routing rules of data packets in the network nodes, and therefore it is possible to dynamically create new network topologies for differentiating network services and the transport mechanisms based on the traffic's characteristics.

However, an SDN is highly centralized and is based on the fundamental assumption of IP networks, namely that the application level (process that sends and receives packets) has little knowledge of the transport and routing dynamics of the network and that the latter has little knowledge of the communication objectives of the application level. In other words, the terminals or end-points of an IoT system cannot explicitly request network services from the SDN and then apply specific routing rules to them and so the possibility of programming the network nodes essentially becomes of little use.

The object of the present invention is to provide a method of routing data packets for an SDN, this method enabling the simplification of implementing an IoT system and, at the same time, is simple and inexpensive to apply. Document WO0115386 discloses to add in each IP packet items of information which univocally identify, in the telecommunications network, a desired network service.

Document US2014269716 discloses a method for routing data packets in a customizable telecommunications network, e.g. a software defined network (SDN), wherein the router and/or controller capabilities are extended so that these devices can inspect the content of data packets.

The invention is defined by the independent claims. Embodiments are defined by the dependent claims.

In accordance with the present invention, a method for routing data packets in a telecommunications network and a telecommunications network are provided, as defined in the appended claims.

The present invention will now be described with reference to the accompanying drawings, which show a non-limitative embodiment, in which:
- Figure 1 shows a general block diagram of a Software Defined Network implementing the data packets routing method of the invention;
- Figure 2 shows a block diagram of a network node of the network of Figure 1; and
- Figure 3 shows the operational flowchart of the network node of Figure 2.

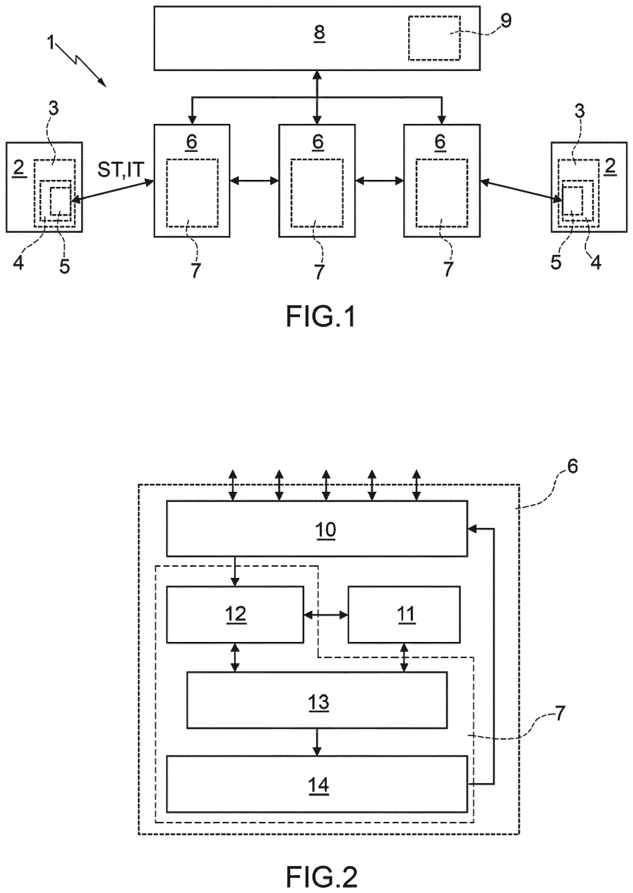

In Figure 1, reference numeral 1 generically indicates a Software Defined Network, referred to hereinafter as SDN 1 for simplicity. The SDN 1 comprises at least two end-points 2, which comprise respective computers 3 configured with appropriate software to run respective application processes 4 through respective sockets 5 so as to exchange data packets between the two end-points 2 within a communication session, one or more network nodes 6, which are interposed between the end-points 2 and comprise respective computers 7 configured to receive the data packets and forward them according to certain routing rules, and a network controller 8, which comprises a respective computer 9 configured to program the routing rules in the network nodes 6.

According to the present invention, the socket 5 of the end-point 2 starting a communication session is designed to add, in each packet to be sent, a service tag ST to univocally identify, in the SDN 1, the application process 4 running on the end-point 2 and a desired network service for this application process 4, and, optionally, an instance tag IT to univocally identify, in the SDN 1, a communication session instance of the application process 4, within the aforementioned communication session, to which to apply the desired network service.

The service tag ST and the instance tag IT consist of two respective strings, that is two sequences of characters defined by a certain number of bits, which must be sufficiently long to enable identifying each application process present on the SDN 1 and the respective desired network service with the first, and a communication session instance of the application process with the second. For example, each of the service and instance tags ST and IT could be defined by 3 or 4 bytes.

The data packets exchanged between the end-points 2 each comprise a message body and a header, both related to at least one communication protocol, and the network nodes 6 process the headers of all the data packets. The service and instance tags ST and IT are inserted in the header related to this communication protocol. Purely by way of non-limitative example, the aforementioned communication protocol is the IP protocol and therefore the service and instance tags ST and IT are inserted in the IP header of each data packet. Preferably, the service and instance tags ST and IT are inserted in the so-called optional IP fields of the IP header, for example in free or "experimental" fields.

The service tag ST indicates, to the SDN 1, the network service that the application process 4 running on the end-point 2 requested for the relevant data packet.

The instance tag IT has a random value generated by the socket 5 and used for the entire duration of the respective communication session instance. The duration of the communication session instance is determined by the application process 4 that uses the socket 5. The instance tag IT indicates, to the SDN 1, which communication session instance the relevant data packet belongs to, in such a way that the network nodes 6 can apply the network service requested with the service tag ST, knowing which packets are part of this communication session instance.

Some examples of communication session instance are as follows:
- a voice call over a VoIP network;
- transferring or copying data from one computer to another;
- acquiring machining cycle data of a single part on an industrial machine; and
- a burst of data packets that initiates the switching on of a sensor and terminates after a certain period of time from when the sensor loses the network connection; when the network connection is restored, the sensor opens a new connection session instance, implying that the network connection had been dropped.

Referring to Figure 2, each network node 6 comprises physical ports 10 designed to receive or send packets, for example through queue handling, and interfaced with the computer 7 of the network node 6, and a memory 11 for storing the routing rules programmed by the network controller 8.

According the invention, the computer 7 is configured with appropriate software that is designed, when run on the computer 7, to read the service tag ST and, when present, the instance tag IT from each data packet received by the ports 10 and apply the routing rules to the data packet based on the service tag ST and, when present, also on the instance tag IT.

In particular, each routing rule is associated with at least one network service that can be provided by the SDN 1 or at least one combination of an application process with a network service that can be provided by the SDN 1 and desired for that application process. Data expressing these associations is stored in the memory 11. More specifically, each network service that can be provided by the SDN 1 and each combination of application process and related network service is identified by a respective service tag, this also consisting of a string of characters and stored in the memory 11 in a manner associated with the related routing rules. Each routing rule consists, for example, of one or more algorithms to be executed on the data packet to be routed. Furthermore, one or more routing rules can correspond to each network service and to each combination of application process and network service.

Furthermore, the computer 7 configured with the aforementioned software implements a plurality of functional blocks comprising, in general, a service control block 12, which is interfaced with the ports 10 and the memory 11 and performs control functions of the network node 6, a service execution block 13, which reads the routing rules from the memory 11 and applies them to the data packets based on the information provided by the service control block 12 and updates the memory 11 with the status of the active communication session instances, and a forwarding block 14, which has the task of materially sending the data packets to the ports 10.

In turn, the service control block 12 implements a parser (not shown) to read and analyse the content of each data packet received. The forwarding block 14 implements one or more known routing technologies (not shown), such as, for example, a router, switch, etc.

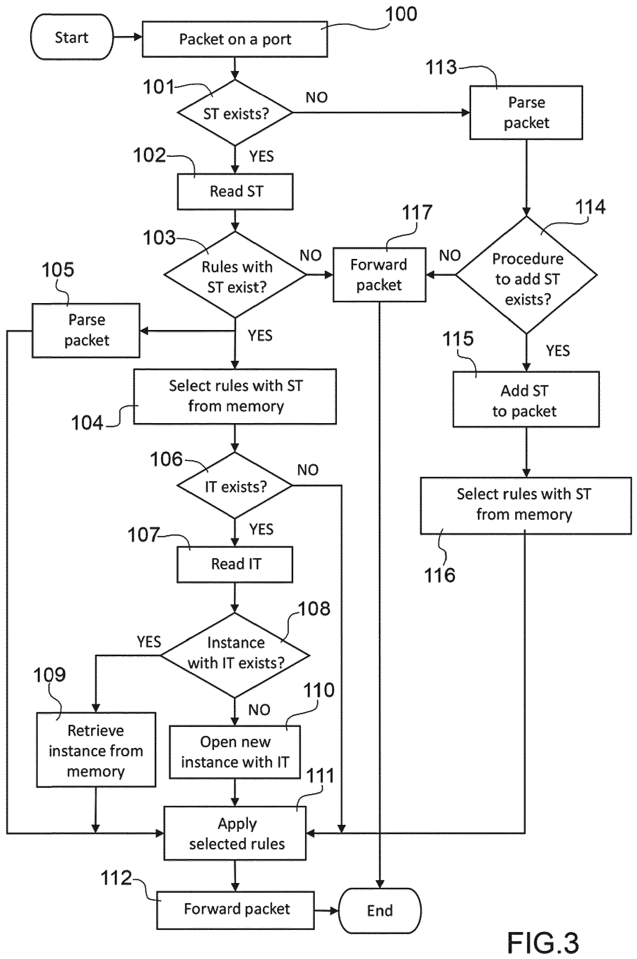

Figure 3 shows a flowchart of the algorithm implemented by blocks 11, 12 and 13. For a clearer description, the flowchart expresses the algorithm in substantially sequential logical steps that do not however necessarily reflect a real implementation.

When a data packet arrives at one of the ports 10 (step 100 in Figure 3), block 12 checks if this data packet incorporates a service tag ST (step 101) and, if so, reads the service tag ST (step 102) and reads the memory 11 to check if a combination of application process and network service exists that has a service tag with the same value as this service tag ST (step 103) .

If the network service identified by the service tag ST exists (YES exit from step 103), then block 12 executes multiple operations in parallel, including: selecting the routing rule(s) associated with the identified combination of application process and network service, reading all the information associated with the service tag ST from the memory 11 (step 104); and parsing the data packet to read information from all the headers (PDUs) of the data packet and, optionally, also from the payload (SDU) of the data packet (step 105).

Block 12 checks if the data packet incorporates a instance tag IT (step 106) and, if so, reads the instance tag IT (step 107) and reads the memory 11 to check if an already open communication session instance identified by the instance tag IT exists for the combination of application process and network service identified by the service tag ST (step 108); if so, block 12 reads the information associated with the existing communication session instance from the memory 11 (step 109); otherwise, this means that the data packet is the first to arrive with that instance tag IT value and therefore block 12 opens a new communication session instance associated with that instance tag IT value, allocating the necessary space in the memory 11 (step 110) .

The service execution block 13 receives all the information regarding the routing rules selected via the service tag ST, the headers of the data packet and the communication session instance identified by the instance tag IT, and applies the routing rules to the data packet (step 111), i.e. it executes the algorithms related to the routing rules in parallel. The communication session instance information is shared by all the routing algorithms that are in execution.

The result of applying the routing rules, which is essentially one or more commands to be executed on the data packet (for example, "send to port", "drop packet", "copy packet to port", etc.), is passed to the forwarding block 14, which materially executes the commands (step 112).

If the packet contains the service tag ST, but does not contain the instance tag IT (NO exit from step 106), then the routing rules (step 111) are applied directly to it without opening any communication session instance.

If the packet does not contain service and instance tags ST and IT (NO exit from step 101), i.e. it is a standard IP packet, then block 12 parses the data packet to read information from all the headers (PDUs) of the data packet (step 113) and checks if there are procedures in the memory 11 for adding a service tag ST to the data packet (step 114): if so, block 12 adds a new service tag ST to the data packet according to these procedures (step 115), selects the routing rule(s) associated with the network service identified by the service tag ST, by reading all the information associated with the service tag ST from the memory 11 (step 116), and applies the routing rules without opening any communication session instance (step 111); otherwise, the data packet is handled as in a normal network node, i.e. it is transferred directly to the forwarding block 14, or deleted (step 117).

The rules for adding the service tag ST are programmed in the network nodes 6 by the network controller 8.

If the combination of application process and network service identified by the service tag ST does not exist (NO exit from step 103), then the data packet is handled as in a normal network node, i.e. it is transferred directly to the forwarding block 14, or deleted (step 117).

If the communication session contemplates response data packets, then the socket 5 of the end-point 2 that replies adds, in each response data packet, a service tag STR, which identifies the same running application process 4 and desired network service for the application process 4 and consists of a copy of the service tag ST and, in the case where the data packet sent from the socket 5 of the end-point 2 that started the communication incorporates an instance tag IT, adds an instance tag ITR, which identifies the communication session instance and consists of a copy of the instance tag IT.

Therefore, the data packet routing method of the present invention acts on the arriving data packet in a stateless mode when the data packet incorporates only a service tag ST or when a service tag is added to the data packet, or in a stateful mode when the data packet incorporates both a service tag ST and an instance tag IT, the latter being optional.

Some examples of communication sessions regarding different applications within the IoT field are provided below.

In a multimedia session that uses the SIP protocol for signalling, two users start a VoIP voice call (VoIP application). All the data packets that the users exchange within the call, i.e. all the signalling packets and all the multimedia packets, will be tagged with the same service tag ST, which informs the network nodes 6 of the SDN 1 of a multimedia session enacted by the VoIP application on the end-point that starts the communication. The various calls within the multimedia session will thus have the same service tag ST, but respective and different session instance tags IT. For example, two different calls started by the same VoIP application could have a same service tag ST equal to "123456789" and two respective session instance tags IT equal to "111111111" and "222222222".

A plurality of industrial machines, for example machine tools, perform variable-length machining cycles and send respective production data to a central server. Each machining cycle can represent a different communication session instance. Each machining cycle of a machine can be characterized by a same service tag ST, but a different communication session instance tag IT. Alternatively, if each machine performs a different machining cycle and the information related to each machine has different transmission requirements, a different network service may correspond to a different communication session instance, i.e. a different service tag ST that informs the SDN 1 to treat the flows in a personalized manner for each machine and each machining cycle.

A plurality of sensors spread around an area send information that is more or less uniform in quality and importance. Each sensor will decide which service tag ST to add to the data packets, thereby informing the SDN 1 of the network service to apply to the packets. Every time a sensor resets the network connection, it opens a new communication session instance by changing the instance tag IT.

Therefore, the service and instance tags ST and IT add a semantic capability to the data packets that is used by the application process 4 to univocally request a network service from the SDN 1 (service tag ST), and by the SDN 1 to identify how many and which packet flows sent from the application process 4 are part of a same communication session instance (instance tag IT) to which to apply the requested network service. These two pieces of information enable the SDN 1 to program the behaviour of the transport level according to semantic information for each application process 4 running on the end-points 2, as the network nodes 6 identify the communication session instances via the instance tag IT and apply the network service requested by the application process 4 via the service tag ST. For this reason, the sockets 5 operating according to the invention can be referred to as "Semantic Sockets" (SSockets or S²ockets) and the SDN 1 having the network nodes 6 operating according to the invention can be referred to as a "Semantic Software Defined Network" (SSDN or S²DN).

The method of the present invention is not only applicable to an SDN, but also to a traditional telecommunications network, for example, an IP network, SDH network or GMPLS network. In other words, according to a further embodiment of the invention that is not shown, the telecommunications network to which the above-described routing method is applied is a telecommunications network devoid of the network controller 8 and which comprises network nodes individually programmed with the routing rules. In particular, the routing rules and data expressing the association between the routing rules and the related combinations between application processes and network services that can be provided by the telecommunications network are stored in the memory of each network node.

## Claims

1. A method for routing data packets in a telecommunications network, which comprises at least two end-points (2) configured to run respective application processes (4) through respective sockets (5) so as to exchange data packets with one another within a communication session, and at least one network node (6) interposed between the two end-points (2) and programmed with data packet routing rules, the method comprising:
- on the part of the socket (5) of the end-point (2) starting the communication session, adding, in each data packet to be sent, first items (ST) of information, which univocally identify, in the telecommunications network, the related running application process (4) and a desired network service for this application process (4);
- on the part of the network node (6), reading (102) said first items (ST) of information from each data packet received by the network node (6); and
- on the part of the network node (6), applying (103-111) the routing rules to the data packet based on the first items (ST) of information.

2. A method according to claim 1 and comprising:
- on the part of the socket (5) of the end-point (2) starting the communication session, adding, in each data packet to be sent, second items (IT) of information, which univocally identify, in the telecommunications network, a communication session instance to which said desired network service is to be applied; and
- on the part of the network node (6), reading (107) said second items (IT) of information from each data packet received by the network node (6);
said routing rules being applied to the data packet based on the first and the second items (ST, IT) of information.

3. A method according to claim 1 or 2, wherein each one of said routing rules is associated with at least one combination of an application process with a network service that can be provided by said telecommunications network and desired for that application process; the step of applying (103-111), on the part of the network node (6), the routing rules to the data packet comprising:
- selecting (103-104), among said routing rules, at least one routing rule associated with a combination of application process and network service identified by the first items (ST) of information read from the data packet.

4. A method according to claims 2 and 3, wherein the step of applying (103-111), on the part of the network node (6), the routing rules to the data packet comprises:
- applying (108-111) the selected routing rule to the data packet based on said second items (IT) of information.

5. A method according to claim 3 or 4, wherein said network node (6) comprises memory means (11) containing data expressing the association between said routing rules and the relative combinations of application processes and network services that can be provided by said telecommunications network.

6. A method according to any one of claims 3 to 5, wherein each one of the combinations of application processes and network services associated with said routing rules is univocally identified by a respective service tag, which consists of a string, and wherein said first items of information comprise a first tag (ST), which identifies said running application process (4) and said desired network service and consists of a string; the step of selecting (103-104) at least one routing rule comprising:
- selecting (104) the routing rule that is associated with a combination of application process and network service whose service tag coincides with said first tag (ST).

7. A method according to claim 4, wherein said second items of information comprise a second tag (IT), which identifies said communication session instance within said communication session and consists of a string; the step of applying (108-111) the selected routing rule to the data packet based on said second items (IT) of information comprising:
- if the data packet is the first one with a given value of the second tag (IT), then storing (110) a new communication instance associated with said given value in memory means (11) of the network node (6); and
- applying (109, 111) the selected routing rule to the data packet within the communication session instance identified by the value of the second tag (IT).

8. A method according to any one of claims 1 to 7, wherein said data packets comprise a message body and a header, both relating to at least one communication protocol, and said first items (ST) of information are inserted in said header; preferably, said communication protocol being the IP protocol; more in particular, said first items (ST) of information being inserted in the optional fields of the IP header.

9. A method according to any one of claims 2 to 8, directly or indirectly depending on claim 2, wherein said data packets comprise a message body and a header, both relating to at least one communication protocol, and said second items (IT) of information are inserted in said header; preferably, said communication protocol being the IP protocol; more in particular, said second items (IT) of information being inserted in the optional fields of the IP header.

10. A method according to any one of claims 1 to 9, wherein said first items of information comprise a first tag (ST), which identifies said running application process (4) and said desired network service and consists of a string; the method comprising:
- on the part of the socket (5) of the end-point (2) responding during the communication session, adding, in each response data packet, a further tag (STR), which identifies the running application process (4) and the desired network service, and consists of a copy of the first tag (ST).

11. A method according to any one of claims 2 to 10, directly or indirectly depending on claim 2, wherein said second items of information comprise a second tag (IT), which identifies said communication session instance and consists of a string; the method comprising:
- on the part of the socket (5) of the end-point (2) responding during the communication session, adding, in each response data packet, a second further tag (ITR), which identifies the communication session instance and consists of a copy of the second tag (IT).

12. A method according to any one of claims 1 to 11, wherein said telecommunications network is a Software Defined Network and comprises a network controller (8) to program said data packet routing rules in the network node (6).

13. A method according to claim 12, and comprising:
- on the part of said network controller (8), storing, in memory means (11) of said at least one network node (6), data expressing the association between said routing rules and the relative combinations of application processes and network services that can be provided by said telecommunications network.

14. A telecommunications network comprising at least two end-points (2), which comprise respective first processing means (3) configured to run respective application processes (4) provided with respective sockets (5) in order to exchange data packets with one another within a communication session, and at least one network node (6), which is interposed between the two end-points (2) and is provided with second processing means (7) and with memory means (11) to store data packet routing rules; said sockets (5) and said second processing means (7) being configured to implement the method according to any one of claims 1 to 13.

15. A telecommunications network according to claim 14 and comprising a network controller (8), which comprises third processing means (9) to program said data packet routing rules in said at least one network node (6), so that the latter and the network controller (8) define, together, a Software Defined Network.

## Patentansprüche

1. Verfahren zum Routing von Datenpaketen in einem Telekommunikationsnetz mit zwei Endpunkten (2), die ausgebildet sind zum Ausführen entsprechender Anwendungsprozesse (4) durch entsprechende Buchsen (5), um Datenpakete innerhalb einer Kommunikationssitzung gegeneinander auszutauschen, und mit mindestens einem Netzwerkknoten (6), der zwischen den zwei Endpunkten (2) angeordnet ist und mit Datenpaket-Routingregeln programmiert ist, wobei das Verfahren umfasst:
- seitens der Buchse (5) des Endpunkts (2) Starten der Kommunikationssitzung, Hinzufügen, in jedes zu sendende Datenpaket, erster Informationselemente (ST), die in dem Telekommunikationsnetz eindeutig den zugehörigen laufenden Anwendungsprozess (4) und einen gewünschten Netzwerkdienst für diesen Anwendungsprozess (4) identifizieren;
- seitens des Netzwerkknotens (6) Lesen (102) der ersten Informationselemente (ST) aus jedem von dem Netzwerkknoten (6) empfangenen Datenpaket; und
- seitens des Netzwerkknotens (6) Anwenden (103-111) der Routingregeln auf das Datenpaket auf Grundlage der ersten Informationselemente (ST).

2. Verfahren nach Anspruch 1, das umfasst:
- seitens der Buchse (5) des Endpunkts (2) Starten der Kommunikationssitzung, Hinzufügen, in jedes zu sendende Datenpaket, zweiter Informationselemente (IT), die in dem Telekommunikationsnetz eindeutig eine Kommunikationssitzungsinstanz identifizieren, auf die der gewünschte Netzwerkdienst angewendet werden soll; und
- seitens des Netzwerkknotens (6) Lesen (107) der zweiten Informationselemente (IT) aus jedem von dem Netzwerkknoten (6) empfangenen Datenpaket; wobei
die Routingregeln auf Grundlage der ersten (ST) und zweiten (IT) Informationselemente auf das Datenpaket angewendet werden.

3. Verfahren nach Anspruch 1 oder 2, wobei jede der Routingregeln mindestens einer Kombination aus einem Anwendungsprozesses mit einem Netzwerkdienst zugeordnet ist, der von dem Telekommunikationsnetz bereitgestellt werden kann und für den Anwendungsprozess erwünscht sein kann; wobei der Schritt des Anwendens (103-111), seitens des Netzwerkknotens (6), der Routingregeln auf das Datenpaket folgendes umfasst:
- Auswählen (103-104), aus den Routingregeln, mindestens einer Routingregel, die einer Kombination aus Anwendungsprozess und Netzwerkdienst zugeordnet ist, die von den aus dem Datenpaket gelesenen ersten Informationselementen (ST) identifiziert wird.

4. Verfahren nach Anspruch 2 oder 3, wobei der Schritt des Anwendens (103-111), seitens des Netzwerkknotens (6), der Routingregeln auf das Datenpaket umfasst:
- Anwenden (108-111) der ausgewählten Routingregel auf das Datenpaket auf Grundlage der zweiten Informationselemente (IT).

5. Verfahren nach Anspruch 3 oder 4, wobei der Netzwerkknoten (6) eine Speichervorrichtung (11) aufweist, die Daten beinhaltet, welche den Zusammenhang zwischen den Routingregeln und den relativen Kombinationen aus Anwendungsprozessen und Netzwerkdiensten ausdrücken, die von dem Telekommunikationsnetz bereitgestellt werden können.

6. Verfahren nach einem der Ansprüche 3 bis 5, wobei jede der Kombinationen aus Anwendungsprozessen und Netzwerkdiensten, die den Routingregeln zugeordnet ist, eindeutig durch einen entsprechenden Dienstkennung identifiziert wird, die aus einem String besteht, und wobei die ersten Informationselemente eine erste Kennung (ST) aufweisen, die den laufenden Anwendungsprozess (4) und den gewünschten Netzwerkdienst identifiziert und aus einem String besteht; wobei der Schritt des Auswählens (103-104) mindestens einer Routingregel umfasst:
- Auswählen (104) der Routingregel, die einer Kombination aus Anwendungsprozess und Netzwerkdienst zugeordnet ist, deren Dienstkennung mit der ersten Kennung (ST) übereinstimmt.

7. Verfahren nach Anspruch 4, wobei die zweiten Informationselemente eine zweite Kennung (IT) aufweisen, welche die Kommunikationssitzungsinstanz innerhalb der Kommunikationssitzung identifiziert und aus einem String besteht; wobei der Schritt des Anwendens (108-111) der ausgewählten Routingregel auf das Datenpaket auf Grundlage der zweiten Informationselemente (IT) umfasst:
- wenn das Datenpaket das erste mit einem gegebenen Wert der zweiten Kennung (IT) ist, dann Speichern (110) einer dem gegebene Wert zugeordneten Kommunikationsinstanz in einer Speichervorrichtung (11) des Netzwerkknotens (6); und
- Anwenden (109, 111) der ausgewählten Routingregel auf das Datenpaket innerhalb der von dem Wert der zweiten Kennung (IT) identifizierten Kommunikationssitzungsinstanz.

8. Verfahren nach einem der Ansprüche 1 bis 7, wobei die Datenpakete einen Nachrichtenkörper und einen Header aufweisen, die sich beide auf mindestens ein Kommunikationsprotokoll beziehen, und wobei die ersten Informationselemente (ST) in dem Header eingefügt sind; wobei das Kommunikationsprotokoll vorzugsweise das IP-Protokoll ist; und wobei die ersten Informationselemente (ST) insbesondere in die optionalen Felder des IP-Headers eingefügt sind.

9. Verfahren nach einem der Ansprüche 2 bis 8, in direkter oder indirekt Abhängigkeit von Anspruch 2, wobei die Datenpakete einen Nachrichtenkörper und einen Header aufweisen, die sich beide auf mindestens ein Kommunikationsprotokoll beziehen, und wobei die zweiten Informationselemente (IT) in den Header eingefügt sind; wobei das Kommunikationsprotokoll vorzugsweise das IP-Protokoll ist; und wobei die zweiten Informationselemente (IT) in die optionalen Felder des IP-Headers eingefügt sind.

10. Verfahren nach einem der Ansprüche 1 bis 9, wobei die ersten Informationselemente eine erste Kennung (ST) aufweisen, die den laufenden Anwendungsprozess (4) und den gewünschten Netzwerkdienst identifiziert und aus einem String besteht; wobei das Verfahren umfasst:
- seitens der Buchse (5) des Endpunkts (2) Antworten während der Kommunikationssitzung, Hinzufügen, in jedes Antwort-Datenpaket, einer weiteren Kennung (STR), die den laufenden Anwendungsprozess (4) und den gewünschten Netzwerkdienst identifiziert und aus einer Kopie der ersten Kennung (ST) besteht.

11. Verfahren nach einem der Ansprüche 2 bis 10, in direkter oder indirekter Abhängigkeit von Anspruch 2, wobei die zweiten Informationselemente eine zweiten Kennung (IT) aufweisen, welche die Kommunikationssitzungsinstanz identifiziert und aus einem String besteht; wobei das Verfahren umfasst:
- seitens der Buchse (5) des Endpunkts (2) Antworten während der Kommunikationssitzung, Hinzufügen, in jedes Antwort-Datenpaket, einer zweiten weiteren Kennung (ITR), welche die Kommunikationssitzungsinstanz identifiziert und aus einer Kopie der zweiten Kennung (IT) besteht.

12. Verfahren nach einem der Ansprüche 1 bis 11, wobei das Kommunikationsnetz ein softwaredefiniertes Netzwerk (Software Defined Network) ist und einen Netzwerkcontroller (8) aufweist, um die Datenpaket-Routingregeln in dem Netzwerkknoten (6) zu programmieren.

13. Verfahren nach Anspruch 12, das umfasst:
- seitens des Netzwerkcontrollers (8) Speichern, in einer Speichervorrichtung (11) des mindestens einen Netzwerkknotens (6), von Daten, welche den Zusammenhang zwischen den Routingregeln und den relativen Kombinationen aus Anwendungsprozessen und Netzwerkdiensten ausdrücken, die von dem Telekommunikationsnetz bereitgestellt werden können.

14. Telekommunikationsnetz mit mindestens zwei Endpunkten (2), die eine entsprechende erste Verarbeitungsvorrichtung (3) aufweisen, die zum Ausführen entsprechender Anwendungsprozesse (4) ausgebildet ist, die in Bezug auf die Buchse (5) bereitgestellt sind, um Datenpakete innerhalb einer Kommunikationssitzung gegeneinander auszutauschen, und mit mindestens einem Netzwerkknoten (6), der zwischen den zwei Endpunkten (2) angeordnet ist und mit einer zweiten Verarbeitungsvorrichtung (7) und einer Speichervorrichtung (11) versehen ist, um Datenpaket-Routingregeln zu speichern; wobei die Buchsen (5) und die zweite Verarbeitungsvorrichtung (7) zum Implementieren des Verfahrens nach einem der Ansprüche 1 bis 13 ausgebildet sind.

15. Telekommunikationsnetz nach Anspruch 14 und mit einem Netzwerkcontroller (8), der eine dritte Verarbeitungsvorrichtung (9) aufweist, um die Datenpaket-Routingregeln in dem mindestens einen Netzwerkknoten (6) zu programmieren, so dass letzterer und der Netzwerkcontroller (8) gemeinsam ein softwaredefiniertes Netzwerk (Software Defined Network) definieren.

## Revendications

1. Procédé de routage de paquets de données dans un réseau de télécommunications, qui comprend au moins deux points d'extrémité (2) configurés pour exécuter des processus d'application respectifs (4) au moyen d'interfaces respectives (5) de manière à échanger des paquets de données les uns avec les autres au sein d'une session de communication, et au moins un nœud de réseau (6) interposé entre les deux points d'extrémité (2) et programmé avec des règles de routage de paquets de données, le procédé comprenant :
- de la part de l'interface (5) du point d'extrémité (2) qui déclenche la session de communication, l'ajout, à chaque paquet de données devant être envoyé, de premiers éléments (ST) d'information, qui identifient d'une manière univoque, dans le réseau de télécommunications, le processus d'application en cours concerné (4) et un service de réseau désiré pour ce processus d'application (4) ;
- de la part du nœud de réseau (6), la lecture (102) desdits premiers éléments (ST) d'information à partir de chaque paquet de données reçu par le nœud de réseau (6) ; et
- de la part du nœud de réseau (6), l'application (103 - 111) des règles de routage au paquet de données sur la base des premiers éléments d'information (ST).

2. Procédé selon la revendication 1 et comprenant :
- de la part de l'interface (5) du point d'extrémité (2) qui déclenche la session de communication, l'ajout, à chaque paquet de données devant être envoyé, de deuxièmes éléments (IT) d'information, qui identifient d'une manière univoque, dans le réseau de télécommunications, un exemple de session de communication auquel ledit service de réseau désiré doit être appliqué ; et
- de la part du nœud de réseau (6), la lecture (107) desdits deuxièmes éléments (IT) d'information à partir de chaque paquet de données reçu par le nœud de réseau (6) ;
lesdites règles de routage étant appliquées au paquet de données sur la base des premiers et deuxièmes éléments (ST, IT) d'information.

3. Procédé selon la revendication 1 ou 2, dans lequel chacune desdites règles de routage est associée à au moins une combinaison d'un processus d'application avec un service de réseau qui peut être fourni par ledit réseau de télécommunications et désiré pour ce processus d'application ; l'étape d'application (103 - 111), de la part du nœud de réseau (6), des règles de routage au paquet de données comprenant :
- la sélection (103 - 104), parmi lesdites règles de routage, d'au moins une règle de routage associée à une combinaison du processus d'application et du service de réseau identifiés par les premiers éléments (ST) d'information lus à partir du paquet de données.

4. Procédé selon les revendications 2 et 3, dans lequel l'étape d'application (103 - 111), de la part du nœud de réseau (6), des règles de routage au paquet de données comprend :
- l'application (108 - 111) de la règle de routage sélectionnée au paquet de données sur la base desdits deuxièmes éléments (IT) d'information.

5. Procédé selon la revendication 3 ou 4, dans lequel ledit nœud de réseau (6) comprend des moyens formant mémoire (11) contenant des données exprimant l'association entre lesdites règles de routage et les combinaisons respectives des processus d'application et des services de réseau qui peuvent être fournis par ledit réseau de télécommunications.

6. Procédé selon l'une quelconque des revendications 3 à 5, dans lequel chacune des combinaisons des processus d'application et des services de réseau associés auxdites règles de routage est identifiée d'une manière univoque par une étiquette de service respective, qui est composée d'une chaîne, et dans lequel lesdits premiers éléments d'information comprennent une première étiquette (ST), qui identifie ledit processus d'application en cours (4) et ledit service de réseau désiré et est composée d'une chaîne ; l'étape de sélection (103 - 104) d'au moins une règle de routage comprenant :
- la sélection (104) de la règle de routage qui est associée à une combinaison de processus d'application et de service de réseau dont l'étiquette de service coïncide avec ladite première étiquette (ST).

7. Procédé selon la revendication 4, dans lequel lesdits deuxièmes éléments d'information comprennent une deuxième étiquette (IT), qui identifie ledit exemple de session de communication au sein de ladite session de communication et est composée d'une chaîne ; l'étape d'application (108 - 111) de la règle de routage sélectionnée au paquet de données sur la base desdits deuxièmes éléments (IT) d'information comprenant :
- si le paquet de données est le premier avec une valeur donnée de la deuxième étiquette (IT), l'enregistrement (110) ensuite d'un nouvel exemple de communication associé à ladite valeur donnée dans les moyens formant mémoire (11) du nœud de réseau (6) ; et
- l'application (109, 111) de la règle de routage sélectionnée au paquet de données au sein de l'exemple de session de communication identifié par la valeur de la deuxième étiquette (IT).

8. Procédé selon l'une quelconque des revendications 1 à 7, dans lequel lesdits paquets de données comprennent un corps de message et un en-tête, les deux se rapportant à au moins un protocole de communication, et lesdits premiers éléments (ST) d'information sont insérés dans ledit en-tête ; de préférence, ledit protocole de communication étant le protocole IP ; plus particulièrement encore, lesdits premiers éléments (ST) d'information étant insérés dans les champs facultatifs de l'en-tête IP.

9. Procédé selon l'une quelconque des revendications 2 à 8, directement ou indirectement dépendantes de la revendication 2, dans lequel lesdits paquets de données comprennent un corps de message et un en-tête, les deux se rapportant à au moins un protocole de communication, et lesdits deuxièmes éléments (IT) d'information sont insérés dans ledit en-tête ; de préférence, ledit protocole de communication étant le protocole IP ; plus particulièrement encore, lesdits deuxièmes éléments (IT) d'information étant insérés dans les champs facultatifs de l'en-tête IP.

10. Procédé selon l'une quelconque des revendications 1 à 9, dans lequel lesdits premiers éléments d'information comprennent une première étiquette (ST), qui identifie ledit processus d'application en cours (4) et ledit service de réseau désiré et est composée d'une chaîne ; le procédé comprenant :
- de la part de l'interface (5) du point d'extrémité (2) qui répond pendant la session de communication, l'ajout, dans chaque paquet de données de réponse, d'une étiquette supplémentaire (STR), qui identifie le processus d'application en cours (4) et le service de réseau désiré, et est composée d'une copie de la première étiquette (ST).

11. Procédé selon l'une quelconque es revendications 2 à 10, directement ou indirectement dépendantes de la revendication 2, dans lequel lesdits deuxièmes éléments d'information comprennent une deuxième étiquette (IT), qui identifie ledit exemple de session de communication et est composée d'une chaîne ; le procédé comprenant :
- de la part de l'interface (5) du point d'extrémité (2) qui répond pendant la session de communication, l'ajout, dans chaque paquet de données de réponse, d'une deuxième étiquette supplémentaire (ITR), qui identifie l'exemple de session de communication et est composée d'une copie de la deuxième étiquette (IT).

12. Procédé selon l'une quelconque des revendications 1 à 11, dans lequel ledit réseau de télécommunications est un Réseau Défini par Logiciel et comprend un contrôleur de réseau (8) pour programmer lesdites règles de routage de paquets de données dans le nœud de réseau (6).

13. Procédé selon la revendication 12, et comprenant :
- de la part dudit contrôleur de réseau (8), l'enregistrement, dans des moyens formant mémoire (11) dudit au moins un nœud de réseau (6), de données exprimant l'association entre lesdites règles de routage et les combinaisons relatives de processus d'application et de services de réseau qui peuvent être fournis par ledit réseau de télécommunications.

14. Réseau de télécommunications comprenant au moins deux points d'extrémité (2) qui comprennent des premiers moyens de traitement respectifs (3) configurés pour exécuter des processus d'application respectifs (4) dotés d'interfaces respectives (5) de manière à échanger des paquets de données les uns avec les autres au sein d'une session de communication, et au moins un nœud de réseau (6), qui est interposé entre les deux points d'extrémité (2) et est doté de deuxièmes moyens de traitement (7) et avec des moyens formant mémoire (11) pour enregistrer des règles de routage de paquets de données ; lesdites interfaces (5) et lesdits deuxièmes moyens de traitement (7) étant configurés pour mettre en œuvre le procédé selon l'une quelconque des revendications 1 à 13.

15. Réseau de télécommunications selon la revendication 14 et comprenant un contrôleur de réseau (8), qui comprend des troisièmes moyens de traitement (9) pour programmer lesdites règles de routage de paquets de données dans ledit au moins un nœud de réseau (6), de sorte que ce dernier et le contrôleur de réseau (8) définissent, ensemble, un Réseau Défini par Logiciel.
